# EUROPEAN PATENT SPECIFICATION

(11) **EP 0 677 158 B1**
(45) Date of publication and mention of the grant of the patent: **25.11.1998**
(21) Application number: 92908990.2
(22) Date of filing: 16.04.1992
(51) Int. Cl.: F16K 31/40, F16K 47/02, D06F 39/08

(54) **WASHING MACHINE WATER INLET ISOLATING VALVE**
WASCHMASCHINENWASSEREINLASSISOLIERVENTIL
ROBINET D'ARRET POUR L'ARRIVEE D'EAU D'UNE MACHINE A LAVER

(30) Priority: 16.04.1991 AU 5608/91; 11.10.1991 AU 8832/91
(43) Date of publication of application: 18.10.1995
(73) Proprietor: Blair, Simon Anthony, Richmond, Victoria 3121 (AU)
(72) Inventor: Blair, Simon Anthony, Richmond, Victoria 3121 (AU)
(74) Representative: Jennings, Nigel Robin
(86) International application number: AU9200171
(87) International publication number: WO9218797

(56) References cited:
- AU-A- 7 243 974
- DE-A- 2 032 822
- GB-A- 2 225 934
- US-A- 3 980 002
- PATENT ABSTRACTS OF JAPAN vol. 9, no. 51 (M-361)(1774) 6 March 1985 & JP-A-59 187 181 (TOUYOU BARUBU) 24 October 1984
- PATENT ABSTRACTS OF JAPAN, M77, page 3458; & JP,A,52 049 661 (MATSUSHITA DENKI SANGYO K.K.) 20 April 1977 (20.04.77).
- PATENT ABSTRACTS OF JAPAN, M77, page 4242; & JP,A,52 065 978 (MATSUSHITA DENKI SANGYO K.K.) 31 May 1977 (31.05.77).
- Derwent Soviet Inventions Illustrated, Section III; Mechanical and General, issued September 1967, General Engineering, P.22; & SU,A,191296 (KOLOKOLOV et al.), October 1968 (00.10.68),

## Description

### TECHNICAL FIELD

This invention relates to improvements in the way water is introduced into a washing machine, including clothes washing machines as well as dishwashers, and more particularly relates to an isolating valve at the water inlet end of a hose extending from a main control valve to the washing machine.

### BACKGROUND ART

Conventional isolating valves situated at the washing machine end of a supply hose consist of a rubber diaphragm which seals over an outlet by virtue of the upstream water pressure. Relieving the pressure upstream of the diaphragm, via a solenoid valve, results in the diaphragm lifting off the outlet and allowing water to pass through the isolating valve. The valve is normally connected to a main supply valve via a pressurised supply hose. The supply hose can rupture causing flooding of the area surrounding the machine, and in addition the diaphragm has a tendency to slam when opening and closing the outlet which is noisy, and also causes fatigue within the hose and valve assembly which can lead to rupture of the hose, particularly at the hose connections, and/or damage to the valve assembly.

### DISCLOSURE OF THE INVENTION

It is a primary object of the present invention to provide an isolating valve adapted to be positioned at the inlet end of a supply hose to a washing machine which will minimise flooding in the case of hose and/or hose connection failure.

JP-A-59 187181 discloses an isolating valve according to preamble of claim 1, adapted for attachment between a main control valve and the inlet end of a supply hose, the valve including a piston chamber containing a piston member which is movable to open and close a valve port communicating with the supply hose. The piston member has a passage passing through it.

It is therefore an object of the present invention to provide an isolating valve adapted to be positioned at the inlet end of a supply hose to a washing machine which will not only minimise flooding in the case of hose and/or hose connection failure, but which also minimises the generation of unacceptable noise when the isolating valve opens and closes.

According to the present invention, an isolating valve for the water supply to a washing machine of the type which is adapted for attachment between a main control valve and the inlet end of a supply hose, the outlet end of which is to be connected to the washing machine, the isolating valve having a piston chamber, which communicates with the main control valve and contains a piston member movable to open and close a valve port communicating with the supply hose, the piston member having a passage extending therethrough, is characterised in that the passage extending through the piston member is connected to and communicates with a small bore control tube which moves with the piston member and extends unconstrained through the interior of the inlet end of the supply hose to a control chamber at a fixed position, that the control chamber has a control port communicating with the interior of the supply hose, that the control tube maintains communication between the passage through the piston member and the control chamber as the piston member moves within the piston chamber and that a solenoid valve, which is operable in response to the washing machine control cycle, is arranged to open and close the control port, whereby the piston member opens and closes the valve port in response to a difference in water pressure on the two sides of the piston member and in response to water pressure fluctuations in the control chamber as the control port is opened and closed by the solenoid valve.

It is preferred that the piston member is freely slidably received in the piston chamber and the piston chamber has at least one aperture through the wall thereof adjacent the valve port, whereby when the piston member is moved away from the valve port water can flow through the apertures and through the valve port to the supply hose.

By virtue of the presence of these apertures, both sides of the piston member are exposed to the water supply pressure and the apertures are preferably so dimensioned that when the control port is open the water pressure within the small bore tube and thus within the piston chamber on the side of the piston member remote from the valve port will drop progressively to a value below the water supply pressure, whereby the piston member will move progressively away from the valve port to allow water to be supplied to the washing machine through the supply hose. When the control port is closed, water pressure within the small bore tube and thus within the piston chamber on the side of the piston member remote from the valve seat will rise progressively back to the water supply pressure to allow the piston member to move progressively back to close the valve port.

It will be apparent that as opening and closing of the valve port occurs progressively, as distinct from abruptly as is the case with a diaphragm valve, fatigue in the supply hose, its connections and the isolating valve itself, will be reduced and the noise generated during such abrupt opening and closing of the valve will also be significantly reduced. In the event of rupturing of the supply hose or failure of the supply hose connections, water pressure in the hose and through the connections will drop to a value below water supply pressure, and the lower pressure on the side of the piston member adjacent the valve seat relative to that on the other side of the piston exposed to water supply pressure will cause the piston member to move to a position closing the valve port.

One preferred embodiment of the invention will now be described with reference to the accompanying drawings, in which:
Figure 1 is a schematic view of the overall arrangement of the main supply valve, isolating valve, supply hose, water control valve assembly and washing machine, and
Figure 2 is also a cross-sectional view of an isolating valve in accordance with the invention associated with a supply hose and a water control valve assembly at the washing machine.

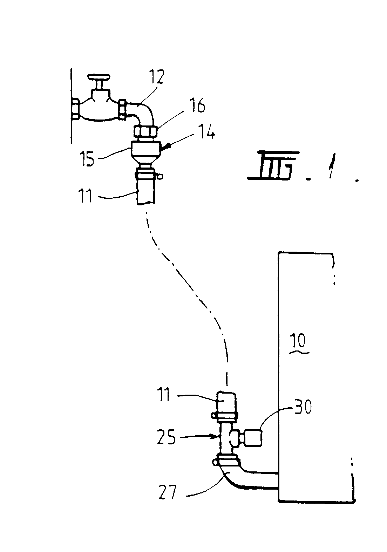

Firstly with reference to Figure 1 of the drawings, there is shown a clothes or dishwashing installation, incorporating a washing machine 10, a supply hose 11, a main supply valve 12, control valve assembly 25, and an isolating valve 14 in accordance with the invention incorporated between the supply valve 12 and the inlet end of the supply hose 11.

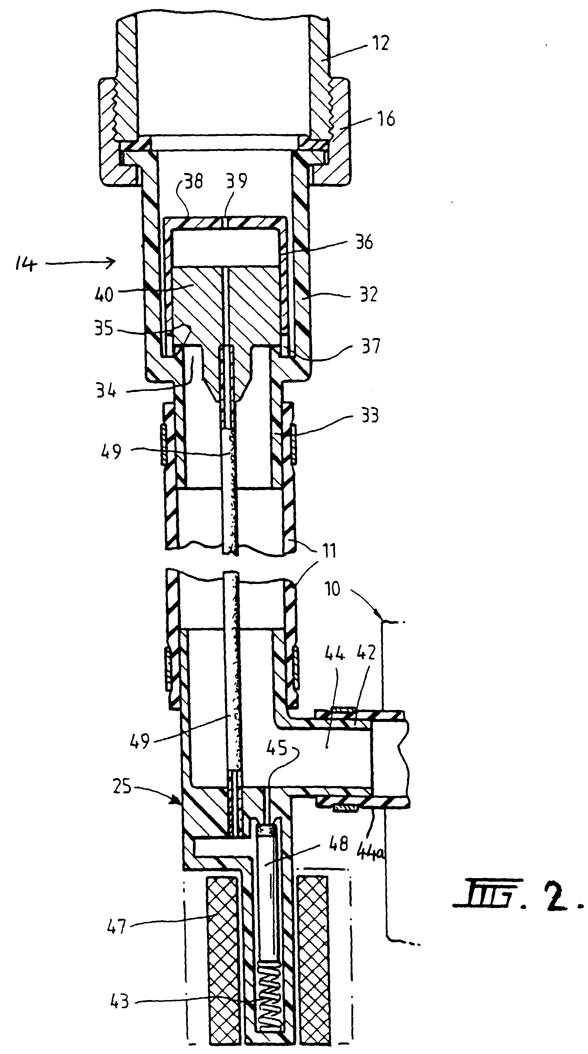

Turning to Figure 2 of the drawings which shows a preferred embodiment of the invention, which enables shutting-off of the water supply through the supply hose at the main supply valve 12, and also dispenses with the need for an isolating valve incorporating a diaphragm and eliminates the problems associated therewith with regard to fatigue of the supply hose and failure of the connections, as well as noise generated, the isolating valve 14 comprises a housing 32 connected at one end in water tight engagement with the main supply valve 12 via a threaded connector 16. The opposite end of the housing 32 has an outlet passage 33 the entrance to which forms a valve port 34 with a valve seat 35 protruding into the housing 32 and over which is positioned a cylindrical piston chamber 36 having an open end with a series of slot shaped apertures 37 adjacent the valve seat 35 and an end wall 38 having one or more small apertures 39 therethrough. Both the slot shaped apertures 37 and the small aperture 39 are exposed to water supply pressure when the main supply valve 12 is open. The piston chamber 36 receives a piston 40 adapted to slide backward and forward within the piston chamber as water pressure on either side of the piston changes.

The outlet passage 33 is attached, for example by a hose clamp, to the inlet end of the supply hose 11 having its outlet end attached, for example once again by a hose clamp, to a water control valve assembly 25 comprising a control valve housing 42 communicating with the supply hose at one end and the washing machine at the other end and containing a control chamber 43 and a passage 44 through which water can pass from the supply hose to the washing machine via a connecting hose 44a. The control chamber 43 has a control port 45 adapted to be opened and closed by a valve member 48 forming part of a solenoid valve comprising an electromagnetic coil 47 surrounding the control valve housing 42 and activated by an electrical control current from the washing machine control system to move a magnetic core member axially within the housing 42 and connected to the valve member 48 to open and close the control port 45 as dictated by the washing machine control cycle.

The interiors of the control chamber 43 and the piston chamber 36 are in communication with each other via a small bore tube 49 extending through the piston 40 to the side remote from the valve seat 35. When the solenoid valve is closed the water pressure within the piston chamber 36 on either side of the piston 40 is equivalent to the water supply pressure as is the water pressure within the small bore tube 49 and the control chamber 43, and as the surface area of the piston on the side remote from the valve seat 35 is greater than that adjacent the valve seat the piston 40 is forced against the valve seat 35 to close the valve port 34 and no water is supplied through the supply hose 11.

Upon actuation of the solenoid valve to open the control port 45 the pressure within the control chamber 43 drops, and as a consequence the pressure within the small bore tube 49 drops, and as the aperture 39 through the end wall 38 of the piston chamber 36 is of such a small dimension as to not quickly compensate for the drop in water pressure in the piston chamber on the side of the piston remote from the valve seat 35, the water supply pressure on the opposite side of the piston via the slot shaped apertures 37 acts to progressively move the piston away from the valve seat 35, rather than abruptly as is the case with conventional diaphragm valves, thus allowing water to flow through the isolating valve 14, supply hose 11 and control valve assembly 25 to the washing machine.

Upon deactivation of the solenoid valve by the machine control system during the washing cycle, to close the control port 45, water pressure in the piston chamber 36, small bore tube 49 and control chamber 43 progressively increases to water supply pressure and as pressure on either side of the piston approaches equalization the greater piston area on the side thereof remote from the valve seat 35 results in the piston moving progressively back to a position seated on the valve seat 35 and closing the valve port 34, and as a result water supply to the washing machine is stopped at the isolating valve. Therefor, at all times except when the control system of the washing machine requires water to be supplied to the machine during the washing cycle, water supply pressure within the supply hose and at its connections is relieved and in the event of rupturing of the supply hose and/or failure of its connections flooding of the surrounding area is restricted to only water remaining downstream of the isolating valve above the point of rupture and/or connection failure.

In addition, as the movement of the piston 40 to close and open the valve port occurs progressively as the relative water pressure on either side of the piston changes progressively, when the solenoid valve assembly is activated and deactivated, as distinct from the abrupt opening and closing operation of a diaphragm valve, the unacceptable noise generated during operation of the isolating valve is also minimised.

In situations where a washing machine is supplied with both hot and cold water an isolating valve will be installed at the inlet ends of the supply hoses for both the hot and cold water.

## Claims

1. An isolating valve (14) for the water supply to a washing machine (10) adapted for attachment between a main control valve (12) and the inlet end of a supply hose (11), the outlet end of which is to be connected to the washing machine, the isolating valve having a piston chamber (36), which communicates with the main control valve (12) and contains a piston member (40) movable to open and close a valve port (34) communicating with the supply hose (11), the piston member (40) having a passage extending therethrough, characterised in that the passage extending through the piston member (40) is connected to and communicates with a small bore control tube (49) which moves with the piston member (40) and extends unconstrained through the interior of the inlet end of the supply hose (11) to a control chamber (43) at a fixed position, that the control chamber (43) has a control port (45) communicating with the interior of the supply hose (11), that the control tube (49) maintains communication between the passage through the piston member (40) and the control chamber (43) as the piston member (40) moves within the piston chamber (36) and that a solenoid valve, which is operable in response to the washing machine control cycle, is arranged to open and close the control port (45), whereby the piston member (40) opens and closes the valve port (34) in response to a difference in water pressure on the two sides of the piston member and in response to water pressure fluctuations in the control chamber (43) as the control port is opened and closed by the solenoid valve.

2. An isolating valve as claimed in Claim 1 in which the piston member (40) is freely slidably received in the piston chamber (36) and the piston chamber (36) has at least one aperture (37) through the wall thereof adjacent the valve port (34), whereby when the piston member (40) is moved away from the valve port (34) water can flow through the apertures (37) and through the valve port (37) to the supply hose.

## Patentansprüche

1. Isolierventil (14) für die Wasserversorgung einer Waschmaschine (10), wobei das Isolierventil befestigbar ist zwischen einem Hauptsteuerventil (12) und dem einlaßseitigen Ende eines Versorgungsschlauches (11), dessen auslaßseitiges Ende an die Waschmaschine angeschlossen werden soll, und wobei das Isolierventil eine Kolbenkammer (36) aufweist, die mit dem Hauptsteuerventil (12) in Verbindung steht und ein Kolbenelement (40) enthält, das bewegbar ist, um eine mit dem Versorgungsschlauch (11) in Verbindung stehenden Ventilöffnung (34) zu öffnen und zu schließen, und die einen durch das Ventilelement (40) hindurchgehenden Durchlaß aufweist,
**dadurch gekennzeichnet,**
daß der durch das Ventilelement (40) hindurchgehende Durchlaß an ein enges Steuerrohr (49) angeschlossen ist und mit diesem in Verbindung steht, wobei sich das enge Steuerrohr mit dem Kolbenelement (40) bewegt und ungehindert durch den Innenraum vom einlaßseitigen Ende des Versorgungsschlauchs (11) bis zu einer ortsfesten Steuerkammer (43) verläuft,
daß die Steuerkammer (43) eine Steueröffnung (45) aufweist, die mit dem Innenraum des Versorgungsschlauches (11) in Verbindung steht,
daß das Steuerrohr (49) die Verbindung zwischen dem Durchlaß durch das Kolbenelement (40) und der Steuerkammer (43) aufrechterhält, wenn sich das Kolbenelement (40) innerhalb der Kolbenkammer (36) bewegt, und
daß ein in Abhängigkeit vom Waschmaschinen-Steuerzyklus betreibbares Magnetventil vorgesehen ist, um die Steueröffnung (45) zu öffnen und zu schließen, wodurch das Kolbenelement (40) die Ventilöffnung (34) in Abhängigkeit von einer auf die beiden Seiten des Kolbenelements einwirkenden Wasserdruckdifferenz und in Abhängigkeit von Wasserdruckschwankungen in der Steuerkammer (43) öffnet und schließt, wenn die Steueröffnung durch das Magnetventil geöffnet und geschlossen wird.

2. Isolierventil nach Anspruch 1, wobei das Kolbenelement (40) in der Kolbenkammer (36) leichtgängig verschiebbar aufgenommen ist und wobei die Kolbenkammer (36) mindestens eine Öffnung (37) aufweist, die durch ihre an die Ventilöffnung (34) angrenzende Wand hindurchgeht, wodurch Wasser durch die Öffnungen (37) und durch die Ventilöffnung (34) in den Versorgungsschlauch fließen kann, wenn das Kolbenelement (40) von der Ventilöffnung (34) wegbewegt wird.

## Revendications

1. Robinet d'arrêt (14) pour l'arrivée d'eau d'une machine à laver (10) adapté pour être fixé entre un distributeur de commande principal (12) et l'extrémité admission d'un tuyau d'alimentation (11) dont l'extrémité évacuation doit être reliée à la machine à laver, le robinet d'arrêt possédant une chambre de piston (36) qui communique avec le distributeur de commande principal (12) et contient un élément de piston (40) mobile pour ouvrir et fermer une bouche de robinet (34) qui communique avec le tuyau d'alimentation (11), l'élément de piston (40) présentant un passage traversant celui-ci, caractérisé en ce que le passage s'étendant à travers l'élément de piston (40) est relié à et communique avec un tube (49) de contrôle à diamètre interne étroit qui se déplace avec l'élément de piston (40) et s'étend librement à l'intérieur de l'extrémité admission du tuyau d'alimentation (11) jusqu'à une chambre de régulation (43) à une position fixe, en ce que la chambre de régulation (43) présente un orifice de régulation (45) qui communique avec l'intérieur du tuyau d'alimentation (11), en ce que le tube de contrôle (49) conserve la communication entre le passage traversant l'élément de piston (40) et la chambre de régulation (43) lorsque l'élément de piston (40) se déplace à l'intérieur de la chambre de piston (36) et en ce qu'un électrodistributeur, qui peut être actionné en réponse au cycle de commande de la machine à laver, est agencé pour ouvrir et fermer l'orifice de régulation (45), de telle sorte que l'élément de piston (40) ouvre et ferme la bouche de robinet (34) en réponse à une différence de pression de l'eau des deux côtés de l'élément de piston et en réponse aux fluctuations de la pression de l'eau dans la chambre de régulation (43) lorsque l'orifice de régulation est ouvert et fermé par l'électrodistributeur.

2. Robinet d'arrêt selon la revendication 1, dans lequel l'élément de piston (40) est reçu librement et de manière coulissante dans la chambre de piston (36) et la chambre de piston (36) possède au moins une ouverture (37) à travers sa paroi adjacente à la bouche de robinet (34), de telle sorte que, lorsque l'élément de piston (40) est éloigné de la bouche de robinet (34), l'eau puisse circuler à travers les ouvertures (37) et à travers la bouche de robinet (37) pour arriver dans le tuyau d'alimentation.
